Europäisches Patentamt

European Patent Office

Office européen des brevets

(19)

(11) **EP 1 200 654 B1**

(12) **FASCICULE DE BREVET EUROPEEN**

(45) Date de publication et mention
de la délivrance du brevet:
**01.12.2004 Bulletin 2004/49**

(51) Int Cl.⁷: **D01F 8/10**, G02B 6/16

(21) Numéro de dépôt: **00951640.2**

(86) Numéro de dépôt international:
**PCT/FR2000/001985**

(22) Date de dépôt: **07.07.2000**

(87) Numéro de publication internationale:
**WO 2001/004394 (18.01.2001 Gazette 2001/03)**

(54) **PROCEDE ET INSTALLATION POUR LA FABRICATION D'UNE FIBRE OPTIQUE**

VERFAHREN UND VORRICHTUNG ZUR HERSTELLUNG EINER OPTISCHEN FASER

METHOD AND INSTALLATION FOR MAKING AN OPTICAL FIBRE

(84) Etats contractants désignés:
**AT BE CH CY DE DK ES FI FR GB GR IE IT LI LU
MC NL PT SE**

(30) Priorité: **09.07.1999 FR 9909124**

(43) Date de publication de la demande:
**02.05.2002 Bulletin 2002/18**

(73) Titulaire: **Optectron Industries
91942 Les Ulis Cedex (FR)**

(72) Inventeurs:
• **CHENET, Pierre
F-92160 Antony (FR)**
• **EROUT, Marie-No[lle
F-91370 Verrières-le-Buisson (FR)**

(74) Mandataire: **Gaucherand, Michel
IXAS Conseil
15 Rue Emile Zola
69002 Lyon (FR)**

(56) Documents cités:
**EP-A- 0 190 656        EP-A- 0 584 632
FR-A- 2 252 586        FR-A- 2 405 806
FR-A- 2 493 997**

• **PATENT ABSTRACTS OF JAPAN vol. 004, no.
156 (P-034), 31 octobre 1980 (1980-10-31) & JP
55 103504 A (NIPPON TELEGR & TELEPH
CORP), 7 août 1980 (1980-08-07)**

Remarques:
Le dossier contient des informations techniques
présentées postérieurement au dépôt de la
demande et ne figurant pas dans le présent
fascicule.

## Description

La présente invention concerne un procédé de fabrication d'une fibre optique en matières polymères à faibles pertes de transmission, cette fibre comprenant une âme et une gaine, l'âme étant formée d'un premier polymère à base de méthacrylate de méthyle et, éventuellement, d'un autre ester (méth)acrylique, la gaine étant formée d'un second polymère ayant un indice de réfraction inférieur à celui de l'âme.

La présente invention concerne également une installation pour la mise en oeuvre de ce procédé.

L'un des problèmes auxquels sont confrontés les industriels qui fabriquent des fibres optiques en matières polymères est de réduire au minimum la quantité de défauts, d'impuretés et de poussières dans le polymère d'âme, parce qu'elles absorbent ou diffusent la lumière et, ainsi, augmentent l'atténuation de la lumière transmise dans la fibre optique.

Un procédé connu de fabrication d'une fibre optique en matières polymères consiste premièrement à préparer un barreau cylindrique plein formé d'un premier polymère à base de méthacrylate de méthyle, puis, deuxièmement, à fibrer, à l'état fondu, ce barreau cylindrique plein, par extrusion. Le second polymère servant à former la gaine de la fibre optique peut être appliqué par coextrusion ou revêtement à partir d'une solution.

Un tel procédé est notamment décrit dans le brevet français n° 2405806. L'une des difficultés d'un tel procédé réside dans l'obtention d'un cylindre plein du polymère de l'âme, qui est préparé par polymérisation radicalaire en masse du méthacrylate de méthyle purifié. Un contrôle total de la polymérisation, et notamment des échanges de chaleur, est indispensable pour éviter toute formation de bulles.

Un autre procédé connu de fabrication d'une fibre optique en matières polymères consiste en un procédé continu selon lequel les monomères pour former l'âme de la fibre, essentiellement du méthacrylate de méthyle, l'initiateur de polymérisation et l'agent de transfert de chaîne sont distillés et purifiés en condition obturée ou étanche. Ensuite, un récipient de polymérisation est chargé des matériaux ainsi distillés et la polymérisation radicalaire en masse est effectuée en chauffant sous pression réduite.

Le polymère résultant, dont la température n'est pas abaissée à la température de transition vitreuse ou moins, est continuellement amené à un dispositif de filage afin d'obtenir, par la suite, une fibre.

Un tel procédé est notamment décrit dans le brevet français n° 2493997.

Comme dans le procédé précédent, la polymérisation radicalaire en masse doit être totalement et précisément contrôlée. En effet, la température de régulation est ici particulièrement importante car la polymérisation radicalaire en masse du méthacrylate de méthyle est fortement exhothermique et peut s'accélérer d'une manière dangereuse. Au niveau industriel, l'exothermie de la réaction de polymérisation génère des problèmes de sécurité, complexes à gérer.

Toutefois, malgré les inconvénients précités de la polymérisation radicalaire en masse du méthacrylate de méthyle, ce type de polymérisation est actuellement recommandé dans de nombreuses publications et préféré à la polymérisation en suspension aqueuse du méthacrylate de méthyle.

Ainsi, selon le brevet français n° 2493997, la préparation de l'âme de la fibre optique en polyméthacrylate de méthyle par polymérisation en suspension nécessite une quantité importante d'eau, le polymère résultant étant alors facilement contaminé de matières étrangères optiques contenues dans cette eau. Par ailleurs, toujours selon ce brevet français, un autre inconvénient de ce type de polymérisation provient de la possibilité de la contamination du polyméthacrylate de méthyle par des matières étrangères optiques lors de l'étape de déshydratation du polymère. De plus, il est encore précisé, dans ce brevet français, qu'une étape de mise en forme de boulette ou de pré-mise en forme du polymère résultant est requise pour mettre en forme ou filer le polymère à l'état fondu. Or, il est alors à craindre que le polymère soit contaminé de matières étrangères optiques au cours de l'étape de mise en forme de boulette pour le polymère ou d'une étape d'alimentation d'un tel polymère en forme de boulette vers un dispositif de fabrication de fibres, ou que le polymère soit oxydé par l'air, parce que le dispositif de préparation du polymère est séparé du dispositif de fabrication des fibres dans la plupart des cas.

Selon les demandes de brevet japonais, publiées avant examen sous les numéros 58 88,701 et 58 88,702, une perte importante de transmission optique de 890 db/km (à une longueur d'onde de 646 nm) et de 1060 db/km (à une longueur d'onde de 577 nm) est constatée quand le polyméthacrylate de méthyle est préparé par polymérisation en suspension aqueuse.

Après des recherches importantes des présents inventeurs, il a été trouvé, de manière surprenante, qu'il est possible de fabriquer une fibre optique en matières polymères présentant de faibles pertes de transmission, cette fibre comprenant une âme et une gaine, l'âme étant formée d'un premier polymère obtenu par polymérisation en suspension aqueuse de méthacrylate de méthyle et, éventuellement, d'un autre ester (méth)acrylique, la gaine étant formée d'un second polymère ayant un indice de réfraction inférieur à celui de l'âme.

Plus précisément, la présente invention a pour objet une procédé discontinu de fabrication d'une fibre optique en matières polymères, cette fibre comprenant une âme et une gaine, l'âme étant formée d'un premier polymère à base de méthacrylate de méthyle et, éventuellement, d'un ester (méth)acrylique différent du méthacrylate de méthyle, la gaine étant formée d'un second polymère ayant un indice de réfraction inférieur à celui de l'âme.

Le procédé selon l'invention est caractérisé en ce qu'il est mis en oeuvre dans une installation en ligne, allant d'un dispositif de purification des matières premières jusqu'à un dispositif de filage, en passant par les différents dispositifs de l'installation en ligne et les différents moyens de transfert reliant les différents dispositifs de l'installation en ligne, cette installation étant prévue étanche à l'air extérieur, aux poussières, ainsi qu'à l'abri de la lumière, en particulier les rayonnements ultraviolets.

En outre, le procédé selon l'invention comprend les étapes suivantes :

(1) on prépare des billes du premier polymère par polymérisation en suspension de méthacrylate de méthyle purifié et, éventuellement, d'au moins un ester (méth)acrylique purifié autre que le méthacrylate de méthyle, dans de l'eau déminéralisée, filtrée et désoxygénée, la polymérisation étant conduite en présence d'au moins un agent initiateur de polymérisation radicalaire, d'au moins un agent de transfert de chaîne et d'au moins un agent de suspension, et en l'absence quasi totale d'inhibiteur de polymérisation et d'impuretés, telles que :

(a) le biacétyle, en quantité réduite à au plus 1 ppm rapporté à la quantité totale de monomères introduits dans le réacteur de polymérisation ;

(b) des ions de métaux de transition susceptibles de donner de fortes absorptions de lumière dans le visible ;

(c) des poussières ou de particules, les différentes matières premières précitées, utiles à la polymérisation en suspension, ayant été filtrées avant polymérisation, avec un seuil de filtration égal à 0,1 micron ; la polymérisation étant également conduite sous agitation, sous une atmosphère d'un gaz inerte et dépoussiéré ;

(2) à l'issue de l'étape (1), on sépare et on lave, à l'aide d'eau déminéralisée et dépoussiérée, et on sèche les billes dans une atmosphère d'un gaz dépoussiéré, de préférence inerte, et, sous cette atmosphère, on stocke les billes séchées dans au moins un réservoir intermédiaire ;

(3) dans une atmosphère d'un gaz dépoussiéré, de préférence inerte, on transfère au moins une partie des billes obtenues à l'issue de l'étape (2), depuis le ou les réservoirs intermédiaires, jusqu'à un dispositif de coextrusion et on coextrude l'âme de la fibre à partir desdites billes, ainsi que la gaine de la fibre à partir d'un polymère ayant un indice de réfraction inférieur à celui de l'âme ;

(4) on refroidit, de façon progressive et contrôlée, la fibre obtenue à la sortie du dispositif de coextrusion de manière à éviter la trempe du premier polymère constitutif de l'âme de la fibre, et on procède à l'étirement de la fibre afin d'obtenir une fibre de diamètre total moyen pouvant varier de 250 à 2000 microns.

Une première caractéristique importante du procédé selon l'invention réside dans son caractère discontinu grâce à la présence d'au moins un réservoir intermédiaire prévu pour les billes du premier polymère à base de méthacrylate de méthyle et, éventuellement, d'un ester (méth)acrylique différent du méthacrylate de méthyle.

Ce ou ces réservoirs intermédiaires, qui sont prévus en amont du dispositif de coextrusion, assurent le stockage des billes séchées du premier polymère et constituent l'une des alimentations du dispositif de coextrusion.

La présence du ou des réservoirs intermédiaires permet de limiter la dépendance de l'étape de coextrusion d'avec les étapes de préparation des billes séchées du premier polymère et, par conséquent, de simplifier le procédé selon l'invention.

Une seconde caractéristique importante du procédé selon l'invention réside dans le fait qu'il est mis en oeuvre dans une installation en ligne, allant d'un dispositif de purification des matières premières jusqu'à un dispositif de filage, en passant par tous les différents dispositifs de cette installation et tous les différents moyens de transfert reliant ces différents dispositifs, et dans le fait que l'intégralité de cette installation en ligne est prévue étanche à l'air extérieur, aux poussières et à l'abri de la lumière, en particulier les rayonnements ultraviolets. Dès lors, le (ou les) réservoir intermédiaire évoqué ci-dessus, qui appartient à l'installation en ligne conforme à la présente invention, est également prévu étanche à l'air extérieur, aux poussières et à l'abri de la lumière, de sorte que le stockage des billes séchées du premier polymère s'effectue dans des conditions étanches vis-à-vis de l'extérieur.

Grâce à l'installation selon l'invention, il est possible d'empêcher la contamination du premier polymère au moyen de poussières et d'impuretés provenant de l'environnement extérieur à l'installation.

Egalement, afin de fabriquer une fibre optique à faibles pertes de transmission, le méthacrylate de méthyle et l'éventuel autre ester (méth)acrylique servant à préparer le premier polymère sont purifiés et distillés afin d'éliminer quasi totalement l'inhibiteur de polymérisation et des impuretés telles que celles citées dans l'étape (1) du procédé selon l'invention.

En particulier, les ions des métaux de transition, spécialement ceux du cobalt, du chrome, du cuivre, du nickel, du fer et du manganèse donnent de fortes absorption dans la lumière visible. C'est pourquoi, il est préférable de réduire la quantité de chacun de ces ions à au plus :

- 1 ppb pour le cobalt,
- 50 ppb pour le fer,
- 50 ppb pour le manganèse,
- 5 ppb pour le chrome,
- 10 ppb pour le cuivre,
- 10 ppb pour le nickel,

les quantités précitées, exprimées en ppb (ou parties par billion), étant rapportées à la quantité totale des monomères introduits dans le réacteur de polymérisation.

Avantageusement, on purifie le méthacrylate de méthyle et le ou les autres esters méthacryliques, servant à préparer les billes du premier polymère par polymérisation en suspension aqueuse, en les soumettant séparément à :

- une opération de filtration sur lit d'alumine basique et activée, de préférence sous une atmosphère d'un gaz inerte et dépoussiéré, pour éliminer au moins partiellement les composés à hydrogène labile, les composés fortement polaires tels que le biacétyle, ainsi que l'inhibiteur de polymérisation ;

- suivie d'au moins deux opérations successives de distillation sous vide partiel et sous une atmosphère d'un gaz inerte et dépoussiéré de sorte qu'à l'issue de ces opérations de distillation, soit éliminée la quasi totalité de l'inhibiteur de polymérisation, du biacétyle et des ions de métaux de transition ; le gaz inerte utilisé lors des distillations est généralement de l'azote et la pression partielle est généralement comprise entre 5000 et 50000 Pascal, de préférence de l'ordre de 10000 Pascal ;

- et, enfin, une opération de filtration sous une atmosphère d'un gaz inerte et dépoussiéré, permettant d'éliminer la quasi totalité des particules ou poussières de diamètre moyen supérieur ou égal à 0,1 μm.

Ensuite, le méthacrylate de méthyle purifié et, le cas échéant, le ou les autres esters (méth)acryliques purifiés sont acheminés directement vers le réacteur de polymérisation, par l'intermédiaire de moyens hermétiquement fermés, c'est-à-dire étanches à l'air extérieur et aux poussières, ainsi que à l'abri de la lumière, plus particulièrement des rayonnements ultraviolets, tout en les maintenant dans une atmosphère d'un gaz inerte et dépoussiéré. A titre de gaz inerte, on utilise de préférence de l'azote. En outre, le gaz inerte est dépoussiéré, c'est-à-dire qu'il a été filtré pour en éliminer les poussières de diamètre moyen supérieur ou égal à 0,1 μm. Cette définition d'un gaz dépoussiéré est valable pour l'ensemble de la description de la présente invention.

Une troisième caractéristique importante du procédé selon l'invention réside dans le fait que l'on utilise une polymérisation en suspension aqueuse pour préparer les billes du premier polymère servant à préparer l'âme de la fibre optique. Pour ce faire, on utilise de l'eau qui est à la fois déminéralisée, filtrée et désoxygénée, afin d'atteindre les degrés de pureté (a), (b) et (c) susmentionnés dans la définition générale du procédé selon l'invention.

De façon surprenante, on a trouvé qu'il est possible de fabriquer une fibre optique ayant d'excellentes caractéristiques de transmission optique si l'on respecte l'ensemble des conditions opératoires énoncées dans la revendication 1 et rappelées ci-dessus.

De préférence, on purifie également au moins l'un des agents utiles à la réalisation de la réaction de polymérisation en suspension aqueuse, de préférence encore tous les agents utilisés, comme suit :

- on purifie l'agent initiateur de polymérisation soit par distillation, soit par recristallisation, en opérant sous atmosphère d'un gaz inerte et dépoussiéré, et on transfère l'agent initiateur de polymérisation purifié dans le réacteur de polymérisation par l'intermédiaire de moyens étanches à l'air extérieur et aux poussières, tout en maintenant cet agent dans une atmosphère d'un gaz inerte et dépoussiéré ;

- on purifie l'agent de transfert de chaîne par distillation, en opérant sous atmosphère d'un gaz inerte et dépoussiéré, et on transfère l'agent de transfert de chaîne distillé dans le réacteur de polymérisation par l'intermédiaire de moyens étanches à l'air extérieur et aux poussières, tout en maintenant cet agent dans une atmosphère d'un gaz inerte et dépoussiéré ;

- on purifie l'agent de suspension par recristallisation, en opérant sous atmosphère d'un gaz inerte et dépoussiéré, et on transfère l'agent de suspension recristallisé dans le réacteur de polymérisation par l'intermédiaire de moyens étanches à l'air extérieur et aux poussières, tout en maintenant cet agent dans une atmosphère d'un gaz inerte et dépoussiéré.

Dans la présente invention, le premier polymère servant à former l'âme de la fibre optique est à base essentiellement de méthacrylate de méthyle et contient, de préférence, au moins 70 moles % de méthacrylate de méthyle, de préférence encore, au moins 90 moles % de méthacrylate de méthyle, ces pourcentages étant rapportés au nombre total de moles de monomères vinyliques servant à préparer le premier polymère.

A titre d'ester (méth)acrylique autre que le méthacrylate de méthyle, on peut utiliser, pour préparer le premier polymère, un ou plusieurs monomères choisis dans le groupe constitué par l'acrylate d'éthyle, le méthacrylate d'éthyle, l'acrylate de méthyle, l'acrylate de propyle, le méthacrylate de propyle, l'acrylate de butyle et le méthacrylate de butyle.

La réalisation de la réaction de polymérisation en suspension aqueuse nécessite l'utilisation d'au moins un agent initiateur de polymérisation, d'au moins un agent de transfert de chaîne et d'au moins un agent de suspension, ces agents étant, de préférence, préalablement purifiés.

A titre d'agent initiateur de polymérisation, il est souhaitable d'utiliser un agent favorisant l'obtention d'une fibre optique ayant de faibles pertes de transmission dans la région de la lumière visible et ayant des températures de décomposition inférieures à 110° C. A cet égard, on peut citer les agents initiateurs de polymérisation de type azoïque comme le 2,2'azobisiso butyronitrile, connu pour son haut degré de pureté, son influence relativement faible dans la région du visible et sa température optimale d'utilisation entre 50 et 80° C.

Les agents initiateurs de polymérisation précités peuvent être combinés avec d'autres ayant des températures de décomposition supérieures à 110° C. A cet égard, on peut citer des composés de type alkylazo comme l'azo-tert-butane, l'azo-n-butane, l'azo-iso-propane et l'azo-n-propane.

A titre d'agent de transfert de chaîne convenant au procédé selon l'invention, on peut citer des composés de la famille des mercaptans linéaires comme le n-butyl mercaptan, le n-propyl mercaptan, le n-dodécyl mercaptan ; des composés de la famille des mercaptans secondaires comme l'isopropylmercaptan ou des composés de la famille des mercaptans tertiaires comme le tertiobutyl mercaptan.

A titre d'agents de suspension convenant au procédé selon l'invention, on peut citer les alcools polyvinyliques, avec un taux d'hydrolyse au moins égal à 75 %, de préférence 85-90 % ; les éthers de cellulose tels que l'hydroxyéthylcellulose ; le phosphate de calcium tribasique ; les homopolymères de l'acide acrylique ou méthacrylique ou les copolymères d'au moins 50 % en poids de ces acides avec des comonomères copolymérisables avec eux, notamment le méthacrylate de méthyle, ces homo- ou copolymères étant utilisés de façon préférée sous la forme de sels de métaux alcalins ou de sels d'ammonium, ou bien sous leur forme neutralisée avec le phosphate disodique. Parmi les agents de suspension précités, on utilise de préférence les homo- et copolymères salifiés en raison de leur caractère hydrophile qui facilite leur élimination lors du lavage des billes du premier polymère.

Conformément à une variante préférée du procédé selon l'invention, les différentes matières premières utiles à la préparation du premier polymère, à savoir l'eau déminéralisée et dépoussiérée, les monomères purifiés et les agents de suspension, de transfert de chaîne et d'initiation de la polymérisation, sont introduits séparément dans des récipients hermétiquement fermés et balayés par un gaz inerte. Ces récipients sont directement reliés au réacteur de polymérisation avec, comme intermédiaire, un doseur pour chaque récipient.

En outre, l'introduction des matières dans le réacteur de polymérisation est, de préférence, conduite selon les étapes suivantes :

- premièrement, on introduit, dans le réacteur, une quantité déterminée d'eau déminéralisée et dépoussiérée provenant directement d'un système de production d'eau ultra-pure, puis on introduit l'agent de suspension en solution dans l'eau, filtré à un seuil de 0,1 μm dans l'ampoule de dosage, avantageusement par l'intermédiaire d'un septum, l'agent de suspension étant avantageusement introduit en imposant une pression légèrement inférieure à la pression atmosphérique dans le réacteur. On chauffe cette eau à la température de polymérisation et, simultanément, on y fait buller un gaz inerte, de préférence de l'azote, afin d'éliminer l'oxygène dissout dans l'eau. Cette étape est généralement assez longue et peut durer plusieurs heures ;

- ensuite, toute la phase organique comprenant les monomères purifiés, l'agent de transfert de chaîne, le ou les initiateurs de polymérisation, sont introduits dans le réacteur, via un filtre de porosité 0,1 μm, par exemple en poussant avec de l'azote dépoussiéré ; toute la phase organique, y compris l'initiateur de polymérisation, est ajoutée, de préférence en une seule fois ;

- on impose, au milieu réactionnel, une agitation plutôt turbulente.

La réaction de polymérisation en suspension est avantageusement conduite sous une pression sensiblement égale à la pression atmosphérique ou légèrement supérieure. La température, dans le réacteur de polymérisation, peut varier de 50° C à 110° C.

La réaction de polymérisation est conduite de sorte que le taux de monomères résiduels soit le plus faible possible, de préférence inférieur à 2 % en mole du total des monomères utiles à la mise en oeuvre de cette polymérisation.

Avantageusement, la polymérisation en suspension est conduite afin de préparer un premier polymère, sous la forme de billes, dont la masse moléculaire en poids ($\overline{Mw}$) varie de 100.000 à 200.000 avec une polydispersité (P) de l'ordre de 2.

A l'issue de la réaction de polymérisation, on sépare et on lave, à l'aide d'eau déminéralisée et dépoussiérée, les billes du premier polymère obtenues et on sèche les billes dans une atmosphère d'un gaz dépoussiéré (c'est-à-dire exempt de poussières ou de particules de diamètre égal ou supérieur à 0,1 μm) et, sous cette atmosphère, on stocke les billes séchées dans au moins un réservoir intermédiaire.

Le (ou les) réservoir intermédiaire peut également être l'enceinte thermostatée servant à sécher les billes du premier polymère.

Avantageusement, on effectue un tri parmi les billes obtenues à l'issue de la réaction de polymérisation du premier polymère, afin d'éliminer celles dont le diamètre moyen est inférieur à 200 μm. De préférence encore, pour préparer l'âme de la fibre optique, on n'utilise que les billes du premier polymère dont le diamètre moyen varie de 500 μm à 2 mm

Avantageusement, on soumet les billes du premier polymère à un traitement anti-électricité statique, avant et/ou pendant l'opération de séchage des billes.

Comme indiqué précédemment, les différents dispositifs pour la séparation, le lavage, l'éventuel tri, le séchage, l'éventuel traitement anti-électricité statique et le stockage des billes du premier polymère, ainsi que les moyens de transfert entre ces dispositifs sont prévus étanches à l'air extérieur, poussières et à l'abri de la lumière, en particulier aux rayonnements ultraviolets.

De préférence, les opérations de séparation, de lavage, de tri, de séchage, de traitement anti-statique, de stockage et de transfert des billes du premier polymère servant à préparer l'âme de la fibre optique, sont réalisées sous une atmosphère d'un gaz qui est dépoussiéré et inerte, par exemple de l'azote.

Selon une autre préférence, dans les différents dispositifs pour la séparation, le lavage, l'éventuel tri, le séchage, l'éventuel traitement anti-électricité statique et le stockage des billes du premier polymère, ainsi que les moyens de transfert entre ces dispositifs de coextrusion, il est avantageux de travailler en légère surpression par rapport à la pression atmosphérique, ceci afin d'éviter que des poussières puissent rentrer dans l'installation.

Les billes séchées du premier polymère sont ensuite transférées depuis le réservoir intermédiaire jusqu'à un dispositif de coextrusion par l'intermédiaire de moyens étanches et sous une atmosphère d'un gaz dépoussiéré, de préférence inerte. On coextrude l'âme de la fibre à partir desdites billes, ainsi que la gaine de la fibre à partir d'un polymère ayant un indice de réfraction inférieur à celui de l'âme et, de préférence, sous la forme de billes.

Conformément au procédé selon l'invention, le transfert entre le réservoir intermédiaire et le dispositif de coextrusion s'effectue sans contact avec l'extérieur, les moyens de transfert étant prévus étanches à l'air extérieur, aux poussières et à l'abri de la lumière, plus spécialement des rayonnements ultraviolets.

La composition de la gaine utilisée dans la présente invention est un polymère ayant un indice de réfraction inférieur à celui du coeur. Les polymères utilisables comme gaine sont nombreux. On peut citer notamment des polymères ou copolymères d'esters fluorés d'acide méthacrylique, comme par exemple le poly (trifluoroéthylméthacrylate), le poly(pentafluoropropylméthacrylate), le poly(hexafluoro-propylméthacrylate), le poly(heptafluorobutyl-méthacrylate) ; des copolymères de fluorure de vinylidène (VDF) avec le tétrafluoroéthylène (VDF-TFE) ou l'hexafluoropropène (VDF-HFP) ; des copolymères (VDF-HFP) ou (VDF-TFE) avec des esters fluorés de l'acide (méth) acrylique.

De préférence, pour former la gaine, on choisit des polymères qui sont sensiblement amorphes.
Les billes séchées du premier polymère et le polymère de la gaine, de préférence sous la forme de billes, sont fondus et filés à chaud par passage au travers d'un dispositif de coextrusion comprenant au moins une extrudeuse à vis munie d'une chambre de dégazage pour former l'âme de la fibre et une extrudeuse à vis servant à former la gaine de la fibre, et un dispositif de filage de composite du type âme-dans-gaine.

De préférence, l'extrusion du premier polymère servant à préparer l'âme de la fibre optique est effectuée à une température n'excédant pas 280° C.

A la sortie du dispositif de coextrusion, au niveau de la filière, la température est généralement de l'ordre de 220-250° C.

Pour l'asservissement global de la ligne de coextrusion, et afin d'assurer la régularité du diamètre final de la fibre, on procédera, de préférence, de la manière qui suit :

- un premier asservissement tenant compte des températures des différents corps de l'extrudeuse, des pressions, des vitesses de rotation des vis, permettant d'assurer un débit de matière constant à la sortie de la tête de filière ;

- un deuxième asservissement permettant d'assurer la régularité du diamètre final de la fibre : asservissement de la vitesse de tirage par la mesure du diamètre en continu dans une zone où la fibre a atteint une température d'environ 80° C ;

Cette manière d'opérer permet de s'affranchir de la zone critique où le matériau est dans une phase élastique, qui peut induire une zone de pompage avec de fortes oscillations, et donc des variations de diamètres très importantes.

La fibre optique sortant du dispositif de coextrusion est refroidie progressivement, en évitant une chute brutale de la température de la fibre optique qui pourrait dégrader ses propriétés mécaniques et optiques par effet de trempe.

Afin de refroidir progressivement la fibre optique sortant du dispositif de filage, on procède de préférence selon l'une ou l'autre des deux méthodes qui suivent :

Première méthode : on refroidit la fibre optique à l'aide d'un courant gazeux, puis à l'aide d'eau thermorégulée, par aspersion, pulvérisation et/ou immersion. Le refroidissement à l'aide d'un courant gazeux est, de préférence, réalisé à l'intérieur d'une colonne protectrice entourant la fibre afin d'éviter des perturbations au niveau de la fibre, risquant de modifier sa géométrie, en particulier son diamètre. De préférence encore, la colonne protectrice est composée de plusieurs blocs successifs avec canalisation pour la fibre optique, chacun de ces blocs étant chauffés à une température qui décroît quand on s'éloigne du dispositif de filage : ceci permet d'assurer un refroidissement progressif, lent et contrôlé, de la fibre optique jusqu'à obtention d'une température suffisamment basse pour procéder au refroidissement à l'eau sans risque de trempe.

<u>Deuxième méthode</u> : on refroidit la fibre à l'aide d'eau thermorégulée, de sorte à ne pas provoquer de chute brutale de la température de la fibre, par aspersion, pulvérisation et/ou immersion.

Parallèlement au refroidissement progressif de la fibre optique, on procède à son étirage en évitant un taux d'étirage trop élevé, qui pourrait conduire à une orientation des chaînes macro-moléculaires trop importante.

De préférence, le taux d'étirage imposé varie de 1,5 à 6, encore mieux, de 2 à 4 (le taux d'étirage correspond au rapport du carré du diamètre de la filière sur le carré du diamètre de la fibre optique).

La présente invention a également pour objet une installation en ligne pour la mise en oeuvre du procédé précité.

Cette installation en ligne présente les caractéristiques suivantes :

- elle est entièrement prévue étanche à l'air extérieur, aux poussières et à l'abri de la lumière, en particulier les rayonnements ultraviolets. Pour ce faire, l'installation, dans son ensemble, est isolé de l'environnement extérieur.

- elle comporte :

    des moyens pour purifier le méthacrylate de méthyle et, le cas échéant, des moyens pour purifier au moins un ester (méth)acrylique autre que le méthacrylate de méthyle, ces moyens de purification devant permettre d'éliminer quasi totalement l'inhibiteur de polymérisation et des impuretés, telles que :

    (a) le biacétyle, en quantité réduite à au plus 1 ppm rapporté à la quantité totale de monomères introduits dans le réacteur de polymérisation,

    (b) des ions de métaux de transition susceptibles de donner de fortes absorptions de lumière dans le visible,

    (c) des poussières ou des particules, les différentes matières premières précitées, utiles à la polymérisation en suspension, ayant été, si nécessaire, filtrées avant polymérisation, avec un seuil de filtration égal à 0,1 micron ;

- au moins un réacteur pour la polymérisation en suspension de méthacrylate de méthyle et, éventuellement, d'au moins un ester (méth)acrylique autre que le méthacrylate de méthyle, dans de l'eau déminéralisée, filtrée et désoxygénée, en présence d'au moins un initiateur de polymérisation radicalaire, d'au moins un agent de transfert de chaîne et d'au moins un agent de suspension, ce réacteur étant équipé de moyens d'agitation du milieu réactionnel, de moyens permettant d'imposer un léger vide partiel et une légère surpression (relativement à la pression atmosphérique) ;

- des moyens de séparation du polymère obtenu sous forme de billes dans le réacteur de polymérisation en suspension aqueuse ;

- éventuellement, des moyens de tri des billes ;

- des moyens de lavage des billes par de l'eau déminéralisée et dépoussiérée ;

- des moyens de séchage des billes dans une atmosphère d'un gaz dépoussiéré ;

- éventuellement, des moyens permettant de supprimer l'électricité statique des billes ;

- des moyens pour stocker les billes ;

- des moyens pour transférer les billes depuis le réacteur de polymérisation en passant par les moyens de lavage, de séchage et de stockage, jusqu'au dispositif de coextrusion ;

- un dispositif de coextrusion comprenant :

    au moins une extrudeuse : selon le cas, une extrudeuse à vis munie d'une zone de dégazage pour former l'âme de la fibre optique, ou deux extrudeuses successives avec une zone de dégazage prévue entre les deux extrudeuses ;

    et une extrudeuse à vis pour fondre et malaxer le second polymère servant à former la gaine de la fibre optique ;

    ainsi qu'un dispositif de filage de composite du type âme-dans-gaine ;

- des moyens permettant de refroidir, de façon progressive et contrôlée, la fibre optique sortant de l'installation de coextrusion ;

- des moyens d'étirage de la fibre optique afin d'atteindre un diamètre total moyen de fibre allant de 250 à 2000 microns.

Avantageusement, les moyens pour purifier le méthacrylate de méthyle et, le cas échéant, au moins un ester (méth)acrylique autre que le méthacrylate de méthyle comportent, successivement :

- un filtre constitué d'un lit d'alumine basique et activée, de préférence sous une atmosphère d'un gaz inerte et dépoussiéré, pour éliminer au moins partiellement les composés à hydrogène labile, les composés fortement polaires tels que le biacétyle, ainsi que l'inhibiteur de polymérisation ;

- au moins un dispositif de distillation sous vide partiel et sous une atmosphère d'un gaz inerte et dépoussiéré afin d'éliminer la quasi totalité de l'inhibiteur de polymérisation, du biacétyle et des ions de métaux de transition ;

- et un filtre permettant d'éliminer la quasi totalité des particules ou poussières de diamètre moyen supérieur ou égal à 0,1 µm.

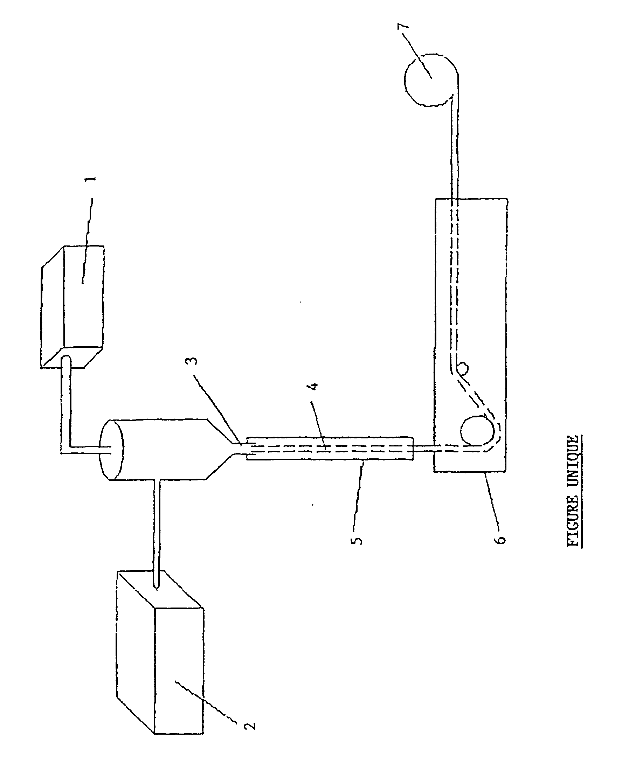

Un exemple de dispositif de coextrusion convenant à la mise en oeuvre du procédé selon l'invention est représenté sur la figure unique jointe à la description.

D'une manière générale, ce dispositif comprend au moins une extrudeuse (1) munie d'une zone de dégazage pour les billes du premier polymère servant à former l'âme de la fibre optique, une extrudeuse (2) pour former la gaine de la fibre optique dans le dispositif (3) de filage de composite de type âme-dans-gaine.

La fibre optique (4) sortant du dispositif (3) de filage est refroidie de façon progressive et contrôlée de manière à éviter la trempe du premier polymère constitutif de l'âme de la fibre :

- premièrement dans une zone de refroidissement (5) ayant la forme d'une canalisation verticale, par de l'air ou un gaz inerte ;

- deuxièmement dans une zone de refroidissement (6) à l'aide d'eau thermorégulée par aspersion et/ou pulvérisation et/ou immersion.

Parallèlement au refroidissement dans les zones (5) et (6), la fibre optique est soumise à un étirage dans les conditions précitées.

La fibre optique est finalement enroulée et stockée sur le cylindre (7).

La portée de la présente invention ne saurait être limitée aux variantes de réalisation précitées et englobe toutes les installations permettant de mettre en oeuvre le procédé selon l'invention.

**Revendications**

**1.** Procédé discontinu de fabrication d'une fibre optique en matières polymères, cette fibre comprenant une âme et une gaine, l'âme étant formée d'un premier polymère à base de méthacrylate de méthyle et, éventuellement, d'un ester (méth)acrylique différent du méthacrylate de méthyle, la gaine étant formée d'un second polymère ayant un indice de réfraction inférieur à celui de l'âme, ce procédé étant **caractérisé en ce que** le procédé est mis en oeuvre dans une installation en ligne, allant d'un dispositif de purification des matières premières jusqu'à un dispositif de filage, en passant par les différents dispositifs de l'installation en ligne et les différents moyens de transfert reliant les différents dispositifs de l'installation en ligne, cette installation étant prévue étanche à l'air extérieur, aux poussières, ainsi qu'à l'abri de la lumière, en particulier les rayonnements ultraviolets, et **en ce que** le procédé comprend les étapes suivantes :

(1) on prépare des billes du premier polymère par polymérisation en suspension de méthacrylate de méthyle purifié et, éventuellement, d'au moins un ester (méth)acrylique purifié autre que le méthacrylate de méthyle, dans de l'eau déminéralisée, filtrée et désoxygénée, la polymérisation étant conduite en présence d'au moins un agent initiateur de polymérisation radicalaire, d'au moins un agent de transfert de chaîne et d'au moins un agent de suspension, et en l'absence quasi totale d'inhibiteur de polymérisation et d'impuretés, telles que :

(a) le biacétyle, en quantité réduite à au plus 1 ppm rapporté à la quantité totale de monomères,

(b) des ions de métaux de transition susceptibles de donner de fortes absorptions de lumière dans le visible,

(c) des poussières ou des particules, les différentes matières premières précitées, utiles à la polymérisation en suspension, ayant été filtrées avant polymérisation, avec un seuil de filtration égal à 0,1 micron, la polymérisation étant également conduite sous agitation, sous une atmosphère d'un gaz inerte ;

(2) à l'issue de l'étape (1), on sépare et on lave, à l'aide d'eau déminéralisée et dépoussiérée, et on sèche les billes dans une atmosphère d'un gaz dépoussiéré, de préférence inerte, et, sous cette atmosphère, on stocke les billes séchées dans au moins un réservoir intermédiaire ;

(3) toujours dans une atmosphère d'un gaz inerte et dépoussiéré, on transfère au moins une partie des billes obtenues à l'issue de l'étape (2), depuis le ou les réservoirs intermédiaires, jusqu'à un dispositif de coextrusion et on coextrude l'âme de la fibre à partir desdites billes, ainsi que la gaine de la fibre à partir d'un polymère ayant un indice de réfraction inférieur à celui de l'âme ;

(4) on refroidit progressivement la fibre obtenue à la sortie du dispositif de coextrusion de manière à éviter la trempe du premier polymère destiné à constituer l'âme de la fibre et on procède à l'étirement de la fibre afin d'obtenir une fibre de diamètre total moyen pouvant varier de 250 à 2000 microns.

2. Procédé selon la revendication 1, **caractérisé en ce que** le premier polymère, servant à former l'âme de la fibre optique, est obtenu par polymérisation en suspension aqueuse d'au moins 70 moles % de méthacrylate de méthyle, ce pourcentage étant rapporté au nombre total de moles de monomères vinyliques.

3. Procédé selon la revendication 2, **caractérisé en ce que** le premier polymère, servant à former l'âme de la fibre optique,, est obtenu par polymérisation en suspension aqueuse d'au moins 90 moles % de méthacrylate de méthyle, ce pourcentage étant rapporté au nombre total de moles de monomères vinyliques.

4. Procédé selon la revendication 1, 2 ou 3, **caractérisé en ce que** l'ester (méth)acrylique, autre que le méthacrylate de méthyle, utilisé pour préparer le premier polymère, servant à former l'âme de la fibre optique, est choisi dans le groupe constitué par l'acrylate d'éthyle, le méthacrylate d'éthyle, l'acrylate de méthyle, l'acrylate de propyle, le méthacrylate de propyle, l'acrylate de butyle et le méthacrylate de butyle.

5. Procédé selon l'une quelconque des revendications précédentes, **caractérisé en ce que** l'on purifie le méthacrylate de méthyle et le ou les esters méthacryliques servant à préparer les billes du premier polymère par polymérisation en suspension aqueuse en les soumettant séparément à :

   - une opération de filtration sur lit d'alumine basique et activée, de préférence sous une atmosphère d'un gaz inerte et dépoussiéré, pour éliminer au moins partiellement les composés à hydrogène labile, les composés fortement polaires tels que le biacétyle, ainsi que l'inhibiteur de polymérisation ;

   - suivie d'au moins deux opérations successives de distillation sous vide partiel et sous une atmosphère d'un gaz inerte et dépoussiéré de sorte qu'à l'issue de ces opérations de distillation, soit éliminée la quasi totalité de l'inhibiteur de polymérisation, du biacétyle et des ions de métaux de transition ;

   - et, enfin, une opération de filtration sous une atmosphère d'un gaz inerte et dépoussiéré, permettant d'éliminer la quasi totalité des particules ou poussières de diamètre moyen supérieur ou égal à 0, 1 $\mu$m.

et **en ce que** le méthacrylate de méthyle purifié et le ou les esters (méth)acryliques purifiés sont ensuite acheminés directement vers le réacteur de polymérisation, par l'intermédiaire de moyens hermétiquement fermés, tout en les maintenant dans une atmosphère d'un gaz inerte et dépoussiéré.

6. Procédé selon la revendication 1, **caractérisé en ce que** l'on purifie l'agent initiateur de polymérisation, soit par distillation, soit par recristallisation, en opérant sous atmosphère d'un gaz inerte et dépoussiéré, et **en ce que** l'on transfère l'agent initiateur de polymérisation purifié dans le réacteur de polymérisation par l'intermédiaire de moyens étanches à l'air extérieur et aux poussières, tout en maintenant cet agent dans une atmosphère d'un gaz inerte et dépoussiéré.

7. Procédé selon la revendication 1, **caractérisé en ce que** l'on purifie l'agent de transfert de chaîne par distillation, en opérant sous atmosphère d'un gaz inerte et dépoussiéré, et **en ce que** l'on transfère l'agent de transfert de chaîne distillé dans le réacteur de polymérisation par l'intermédiaire de moyens étanches à l'air extérieur et aux poussières, tout en maintenant cet agent dans une atmosphère d'un gaz inerte et dépoussiéré.

8. Procédé selon la revendication 1, **caractérisé en ce que** l'on purifie l'agent de suspension par recristallisation, en opérant sous atmosphère d'un gaz inerte et dépoussiéré, et **en ce que** l'on transfère l'agent de suspension recristallisé dans le réacteur de polymérisation par l'intermédiaire de moyens étanches à l'air extérieur et aux poussières, tout en maintenant cet agent dans une atmosphère d'un gaz inerte et dépoussiéré.

**9.** Procédé selon l'une quelconque des revendications précédentes, **caractérisé en ce que** l'on effectue la réaction de polymérisation en suspension sous une pression sensiblement égale à la pression atmosphérique ou légèrement supérieure.

**10.** Procédé selon l'une quelconque des revendications précédentes, **caractérisé en ce que**, parmi les billes séchées du premier polymère, obtenues à l'issue de l'étape (2), on élimine celles dont le diamètre moyen est inférieur à 200 microns.

**11.** Procédé selon la revendication 10, **caractérisé en ce que**, pour préparer l'âme de la fibre optique, on ne conserve que les billes séchées du premier polymère dont le diamètre moyen varie de 500 microns à 2 mm

**12.** Procédé selon l'une quelconque des revendications précédentes, **caractérisé en ce que** la polymérisation en suspension est conduite afin de préparer un premier polymère, sous la forme de billes, dont la masse moléculaire moyenne en poids ($\overline{Mw}$) varie de 100.000 à 200.000 avec une polydispersité (P) de l'ordre de 2.

**13.** Procédé selon l'une quelconque des revendications précédentes, **caractérisé en ce que** le taux de monomères résiduels n'ayant pas réagi à l'issue de la réaction de polymérisation en suspension est inférieur à 2 moles % rapporté au total des monomères utiles à la mise en oeuvre de cette polymérisation.

**14.** Procédé selon l'une quelconque des revendications précédentes, **caractérisé en ce que** l'on effectue les opérations de séparation, de lavage, de séchage, de stockage, et de transfert des billes du premier polymère servant à préparer l'âme de la fibre optique, sous une atmosphère d'un gaz inerte et dépoussiéré.

**15.** Procédé selon l'une quelconque des revendications précédentes, **caractérisé en ce que** l'on extrude les billes du premier polymère, servant à préparer l'âme de la fibre optique, à une température maximale de 280° C.

**16.** Installation en ligne pour la mise en oeuvre du procédé selon la revendication 1, **caractérisée en ce qu'**elle est entièrement prévue étanche à l'air extérieur, aux poussières et à l'abri de la lumière, et **en ce qu'**elle comporte :

-      des moyens pour purifier le méthacrylate de méthyle et, le cas échéant, des moyens pour purifier au moins un ester (méth)acrylique autre que le méthacrylate de méthyle, ces moyens de purification devant permettre d'éliminer quasi totalement l'inhibiteur de polymérisation et des impuretés, telles que :

     (a) le biacétyle, en quantité réduite à au plus 1 ppm rapporté à la quantité totale de monomères introduits dans le réacteur de polymérisation,

     (b) des ions de métaux de transition susceptibles de donner de fortes absorptions de lumière dans le visible,

     (c) des poussières ou de particules, les différentes matières premières précitées, utiles à la polymérisation en suspension, ayant été, si nécessaire, filtrées avant polymérisation, avec un seuil de filtration égal à 0,1 micron ;

-      au moins un réacteur pour la polymérisation en suspension de méthacrylate de méthyle et, éventuellement, d'au moins un ester (méth) acrylique autre que le méthacrylate de méthyle, dans de l'eau déminéralisée, filtrée et désoxygénée, en présence d'au moins un initiateur de polymérisation radicalaire, d'au moins un agent de transfert de chaîne et d'au moins un agent de suspension, ce réacteur étant équipé de moyens d'agitation du milieu réactionnel, de moyens permettant d'imposer un léger vide partiel et une légère surpression (relativement à la pression atmosphérique) ;

-      des moyens de séparation du polymère obtenu sous forme de billes dans le réacteur de polymérisation en suspension aqueuse ;

-      des moyens de lavage des billes par de l'eau déminéralisée et dépoussiérée ;

-      éventuellement, des moyens de tri des billes ;

-      des moyens de séchage des billes ;

-      éventuellement, des moyens pour effectuer un traitement anti électricité statique des billes ;

-      des moyens pour stocker les billes ;

-      des moyens pour transférer les billes depuis le réacteur de polymérisation en passant par les moyens de séchage, jusqu'à l'installation de coextrusion ;

-      une installation de coextrusion comprenant au moins deux extrudeuses :

     une ou deux extrudeuses à vis avec une zone de dégazage pour la formation de l'âme de la fibre optique ;

et une seconde extrudeuse à vis pour fondre et malaxer le second polymère servant à former la gaine de la fibre optique ;

ainsi qu'un dispositif de filage de composite du type âme-dans-gaine ;

- des moyens permettant de refroidir, de façon progressive et contrôlée, la fibre optique sortant de l'installation de coextrusion;

- des moyens d'étirage de la fibre optique afin d'atteindre un diamètre total moyen de fibre allant de 250 à 2000 microns.

17. Installation en ligne selon la revendication 16, **caractérisée en ce que** les moyens pour purifier le méthacrylate de méthyle et, le cas échéant, au moins un ester (méth)acrylique autre que le méthacrylate de méthyle comportent, successivement :

- un filtre constitué d'un lit d'alumine basique et activée, de préférence sous une atmosphère d'un gaz inerte et dépoussiéré, pour éliminer au moins partiellement les composés à hydrogène labile, les composés fortement polaires tels que le biacétyle, ainsi que l'inhibiteur de polymérisation ;

- au moins un dispositif de distillation sous vide partiel et sous une atmosphère d'un gaz inerte et dépoussiéré afin d'éliminer la quasi totalité de l'inhibiteur de polymérisation, du biacétyle et des ions de métaux de transition ;

- et un filtre permettant d'éliminer la quasi totalité des particules ou poussières de diamètre moyen supérieur ou égal à 0,1 μm.

## Claims

1. A discontinuous process for manufacturing an optical fibre from polymer fibres, this fibre comprising a core and a sheath, the core being formed by a first polymer based on methyl methacrylate and, possibly, a (meth)acrylic ester different from methyl methacrylate, the sheath being formed by a second polymer having a refraction coefficient lower than that of the core, this process being **characterised in that** the process is implemented in an in-line installation, going from a purification device for the base materials to a spinning device, passing through the different devices of the in-line installation and the different transfer means connecting the different devices of the in-line installation, this installation being provided tight to the surrounding air, to dust, and also protected from light, in particular ultraviolet radiation, **and in that** the process comprises the following steps:

(1) balls of the first polymer are prepared by suspension polymerisation from purified methyl methacrylate and, possibly, at least one purified (meth)acrylic ester other than methyl methacrylate, in water that has been demineralised, filtered and deoxygenated, polymerisation being performed in the presence of at least one initiating agent for radical polymerisation, at least one chain-transfer agent and at least one suspension agent, and in the nearly total absence of a polymerisation and impurity inhibitor, such as:

(a) biacetyl, in a quantity reduced to at most 1 ppm in relation to the total quantity of monomers,
(b) ions of transition metals able to give great optical absorption in the visible spectrum,
(c) dust or particles, the above-mentioned different base materials, useful for suspension polymerisation, having been filtered prior to polymerisation, with a filtration threshold equal to 0.1 micron, polymerisation also being carried out accompanied by stirring, in an atmosphere of an inert gas;

(2) at the end of step (1) the balls are separated and washed, using demineralised, dust-free water, and are dried in an atmosphere of a dust-free, preferably inert, gas and, in this atmosphere, the dried balls are stocked in at least one intermediate tank;
(3) still in an atmosphere of an inert, dust-free gas, at least a part of the balls obtained at the end of step (2) is transferred from the intermediate tank or tanks to a co-extrusion device and the core of the fibre is co-extruded from the said balls, and also the sheath of the fibre from a polymer having a refraction coefficient lower than that of the core;
(4) the fibre obtained at the outlet of the co-extrusion device is progressively cooled so as to avoid the quenching of the first polymer intended to form the core of the fibre and one proceeds with the drawing of the fibre so as to obtain a fibre having an average total diameter which may vary from 250 to 2000 microns.

2. A process according to Claim 1,

**characterised in that** the first polymer, serving to form the core of the optical fibre, is obtained by aqueous suspension polymerisation of at least 70 moles % methyl methacrylate, this percentage being related to the total number of moles of vinyl monomers.

3. A process according to Claim 2,
**characterised in that** the first polymer, serving to form the core of the optical fibre, is obtained by aqueous solution polymerisation of at least 90 moles % of methyl methacrylate, this percentage being related to the total number of moles of vinyl monomers.

4. A process according to Claim 1, 2 or 3,
**characterised in that** the (meth)acrylic ester, other than the methyl methacrylate, used to prepare the first polymer, serving to form the core of the optical fibre, is chosen from the group formed by ethyl acrylate, ethyl methacrylate, methyl acrylate, propyl acrylate, propyl methacrylate, butyl acrylate and butyl methacrylate.

5. A process according to any one of the preceding Claims,
**characterised in that** the methyl methacrylate and the methacrylic ester or esters used to prepare the balls of the first polymer by aqueous suspension polymerisation is purified by subjecting them separately to:

- a filtration operation on a bed of basic, activated alumina, preferably in an atmosphere of an inert, dust-free gas, to eliminate at least partially the unstable hydrogen compounds, the greatly polar compounds such as biacetyl, and also the polymerisation inhibitor;
- followed by at least two successive distillation operations in a partial vacuum and in an atmosphere of an inert, dust-free gas so that at the end of these distillation operations nearly all the polymerisation inhibitor, the biacetyl and the ions of transition metals are eliminated;
- and finally a filtration operation in an atmosphere of an inert, dust-free gas, which enables nearly all the particles or dust having an average diameter greater than or equal to 0.1 $\mu$m to be eliminated,

**and in that** the purified methyl methacrylate and the purified (meth)acrylic ester or esters are then conveyed directly towards the polymerisation reactor, using hermetically sealed means, whilst keeping them in an atmosphere of an inert, dust-free gas.

6. A process according to Claim 1,
**characterised in that** the polymerisation initiating agent is purified either by distillation or by recrystallisation, by operating in an atmosphere of inert, dust-free gas,
and **in that** the purified polymerisation initiating agent is transferred into the polymerisation reactor by using means tight to the surrounding air and to dust, whilst keeping this agent in an atmosphere of an inert, dust-free gas.

7. A process according to Claim 1,
**characterised in that** the chain-transfer agent is purified by distillation, operating in an atmosphere of an inert, dust-free gas,
**and in that** the distilled chain-transfer agent is transferred into the polymerisation reactor by using means tight to the surrounding air and to dust, whilst keeping this agent in an atmosphere of an inert, dust-free gas.

8. A process according to Claim 1,
**characterised in that** the suspension agent is purified by recrystallisation, working in an atmosphere of an inert, dust-free gas,
**and in that** the recrystallised suspension agent is transferred into the polymerisation reactor by using means tight to the surrounding air and to dust, whilst keeping this agent in an atmosphere of an inert, dust-free gas.

9. A process according to any one of the preceding Claims,
**characterised in that** the suspension polymerisation reaction is carried out at a pressure that is substantially equal to atmospheric pressure or slightly above.

10. A process according to any one of the preceding Claims,
c**haracterised in that** from the dried balls of the first polymer, which are obtained at the end of step (2), those having an average diameter of less than 200 microns are eliminated.

11. A process according to Claim 10,
**characterised in that** to prepare the core of the optical fibre only the dried balls of the first polymer having an average diameter varying from 500 microns to 2 mm are retained.

12. A process according to any one of the preceding Claims,
**characterised in that** suspension polymerisation is performed so as to prepare a first polymer, in the form of balls, having an average molecular mass in weight ($\overline{Mw}$) varying from 100,000 to 200,000 with a polydispersity (P) in the order of 2.

13. A process according to any one of the preceding Claims,

characterised in that the proportion of residual monomers not having reacted at the end of the suspension polymerisation reaction is less than 2 moles % in relation to the total of the monomers used for the implementation of this polymerisation.

14. A process according to any one of the preceding Claims,

characterised in that the separation, washing, drying, storing and transfer operations for the balls of the first polymer used to prepare the core of the optical fibre is carried out in an atmosphere of an inert, dust-free gas.

15. A process according to any one of the preceding Claims,

characterised in that the balls of the first polymer used to prepare the core of the optical fibre are extruded at a maximum temperature of 280°C.

16. An in-line installation for the implementation of the process according to Claim 1,

characterised in that it is entirely provided tight to the surrounding air, to dust and protected from light, and in that it comprises:

- means for purifying the methyl methacrylate and, if necessary, means for purifying at least one (meth)acrylic ester other than methyl methacrylate, these purification means having to allow the elimination of nearly all the polymerisation inhibitor and impurities, such as:

  (a) biacetyl, in a quantity reduced to at most 1 ppm in relation to the total quantity of monomers introduced into the polymerisation rector,
  (b) ions of transition metals capable of giving great optical absorption in the visible range,
  (c) dust or particles, the above-mentioned different base materials, useful for suspension polymerisation, if necessary having been filtered prior to polymerisation, with a filtration threshold equal to 0.1 micron;

- at least one reactor for the suspension polymerisation of methyl methacrylate and, possibly, at least one (meth)acrylic ester other than methyl methacrylate, in water that has been demineralised, filtered and deoxygenated, in the presence of at least one radical polymerisation initiator, at least one chain-transfer agent and at least one suspension agent, this reactor being equipped with stirring means for the reactional medium, means enabling a slight partial vacuum and slight overpressure to be imposed (relative to atmospheric pressure);

- separation means for the polymer obtained in the form of balls in the aqueous suspension polymerisation reactor;
- means for washing the balls using demineralised, dust-free water,
- possibly, sorting means for the balls;
- means for drying the balls;
- possibly, means for performing a treatment preventing static electricity on the balls;
- means for storing the balls;
- means for transferring the balls from the polymerisation reactor by passing through the drying means, to the co-extrusion installation;
- a co-extrusion installation comprising at least two extruders:

  . one or two screw extruders having a degassing zone for the formation of the core of the optical fibre;
  . and a second screw extruder to melt and squeeze the second polymer used to form the sheath of the optical fibre;

  and also a composite spinning device of the core-in-sheath type;
- means enabling the optical fibre emerging from the co-extrusion installation to be cooled in a progressive, controlled manner;
- drawing means for the optical fibre so as to achieve an average total diameter of the fibre ranging from 250 to 2000 microns.

17. An in-line installation according to Claim 16,

characterised in that the means for purifying the methyl methacrylate and, if the case arises, at least one (meth)acrylic ester other than the methyl methacrylate successively comprise:

- a filter formed by a basic, activated alumina bed, preferably in an atmosphere of an inert, dust-free gas, in order to eliminate at least partially the unstable hydrogen compounds, the greatly polar compounds such as biacetyl, and also the polymerisation inhibitor;
- at least one distillation device in a partial vacuum and in an atmosphere of an inert, dust-free gas in order to eliminate nearly all the polymerisation inhibitor, the biacetyl and the ions of transition metals;
- and a filter allowing nearly all the particles or dust having an average diameter greater than or equal to 0.1 $\mu$m to be eliminated.

**Patentansprüche**

1. Diskontinuierliches Verfahren zur Herstellung einer optischen Faser aus Polymer-Materialien, die einen Kern und eine Hülle umfasst, wobei der Kern aus einem ersten Polymer auf Basis von Methylmethacrylat und gegebenenfalls eines von Methylmethacrylat verschiedenen (Meth)Acrylesters hergestellt ist, und die Hülle aus einem zweiten Polymer mit einem Brechungsindex, der niedriger ist als derjenige des Kerns, hergestellt ist, wobei das Verfahren **dadurch gekennzeichnet ist, dass** es in einer Reihen-Anlage durchgeführt wird, beginnend mit einer Einrichtung zur Reinigung der Ausgangsmaterialien bis zu einer Spinneinrichtung, das die verschiedenen Einrichtungen der Reihen-Anlage und die verschiedenen Überführungseinrichtungen, welche die verschiedenen Einrichtungen der Reihen-Anlage miteinander verbinden, passiert, wobei diese Anlage so ausgestattet ist, dass sie gegenüber der Außenluft abgeschlossen ist, staubdicht ist und gegenüber Licht, insbesondere gegenüber ultravioletten Strahlen, abgeschlossen ist, und dass das Verfahren die folgenden Stufen umfasst:

(1) man stellt kleine Kugeln (Perlen) aus dem ersten Polymer her durch Polymerisation in Suspension von gereinigtem Methylmethacrylat und gegebenenfalls mindestens einem von Methylmethacrylat verschiedenen, gereinigten (Meth)Acrylester in entmineralisiertem, filtriertem und von Sauerstoff befreitem Wasser, wobei die Polymerisation durchgeführt wird in Gegenwart mindestens eines radikalischen Polymerisationsinitiators, mindestens eines Kettenübertragungsmittels und mindestens eines Suspendiermittels und im Wesentlichen in vollständiger Abwesenheit eines Polymerisationsinhibitors und von Verunreinigungen, wie z.B.:

(a) Biacetyl in einer Menge, die bis auf höchstens 1 ppm vermindert ist, bezogen auf die Gesamtmenge der Monomeren,
(b) Übergangsmetallionen, die starke Lichtabsorptionen im sichtbaren Bereich ergeben können,
(c) Stäuben oder Teilchen, wobei die genannten verschiedenen Ausgangsmaterialien, die für die Polymerisation in Suspension verwendet werden, vor der Polymerisation filtriert worden sind bis zu einem Filtrationsschwellenwert von 0,1 μm,

wobei die Polymerisation auch unter Rühren in einer Inertgasatmosphäre durchgeführt wird;
(2) am Ende der Stufe (1) trennt man ab und wäscht mit Hilfe von entmineralisiertem und von Staub befreitem Wasser und trocknet die Kugeln in einer staubfreien, vorzugsweise inerten Gasatmosphäre und unter dieser Atmosphäre lagert man die getrockneten Kugeln in mindestens einem Zwischenbehälter;
(3) weiterhin in einer von Staub befreiten Inertgasatmosphäre überführt man mindestens einen Teil der am Ausgang der Stufe (2) erhaltenen Kugeln (Perlen) von dem (den) Zwischenbehälter(n) in eine Coextrusionseinrichtung und coextrudiert den Kern der Faser, ausgehend von den genannten Kugeln sowie die Hülle der Faser, ausgehend von einem Polymer, das einen Brechungsindex aufweist, der niedriger ist als derjenige des Kerns;
(4) man kühlt allmählich die am Ausgang der Coextrusionseinrichtung erhaltene Faser so ab, dass eine Abschreckung des ersten Polymers, das den Kern der Faser aufbauen soll, vermieden wird, und zieht anschließend die Faser aus zur Herstellung einer Faser mit einem mittleren Gesamtdurchmesser, der zwischen 250 und 2 000 μm variieren kann.

2. Verfahren nach Anspruch 1, **dadurch gekennzeichnet, dass** das erste Polymer, aus dem der Kern der optischen Faser hergestellt werden soll, erhalten worden ist durch Polymerisation in wässriger Suspension von mindestens 70 Mol-% Methylmethacrylat, wobei dieser Prozentsatz bezogen ist auf die Gesamtanzahl der Mole der Vinylmonomeren.

3. Verfahren nach Anspruch 2, **dadurch gekennzeichnet, dass** das erste Polymer, aus dem der Kern der optischen Faser hergestellt werden soll, erhalten worden ist durch Polymerisation in wässriger Suspension von mindestens 90 Mol-% Methylmethacrylat, wobei dieser Prozentsatz auf die Gesamtanzahl der Mole der Vinylmonomeren bezogen ist.

4. Verfahren nach Anspruch 1, 2 oder 3, **dadurch gekennzeichnet, dass** der von Methylmethacrylat verschiedene (Meth)Acrylester, der zur Herstellung des ersten Polymers verwendet worden ist, das zur Herstellung des Kerns der optischen Faser dienen soll, ausgewählt worden ist aus der Gruppe, die besteht aus Ethylacrylat, Ethylmethacrylat, Methylacrylat, Propylacrylat, Propylmethacrylat, Butylacrylat und Butylmethacrylat.

5. Verfahren nach einem der vorhergehenden Ansprüche, **dadurch gekennzeichnet, dass** man das Methylmethacrylat und den oder die Methacrylester, der (die) zur Herstellung der Kugeln aus dem ersten Polymer durch Polymerisation in wässriger Suspension dienen sollen, reinigt, indem man sie getrennt unterwirft:

- einer Filtration durch ein Bett aus basischem und aktiviertem Aluminiumoxid, vorzugsweise in einer von Staub befreiten Inertgasatmosphäre, um die Verbindungen mit labilem Wasserstoff, die stark polaren Verbindungen wie Biacetyl sowie den Polymerisationsinhibitor mindestens teilweise zu eliminieren;

- danach mindestens zwei aufeinanderfolgenden Destillationen unter partiellem Vakuum und in einer von Staub befreiten Inertgasatmosphäre, sodass am Ende dieser Destillationen praktisch die Gesamtmenge des Polymerisationsinhibitors, des Biacetyls und der Übergangsmetallionen eliminiert ist;

- und schließlich einer Filtration in einer von Staub befreiten Inertgasatmosphäre, mit der praktisch die Gesamtmenge der Teilchen oder der Stäube mit einem mittleren Durchmesser von ≥ 0,1 µm entfernt werden kann,

und dass man das gereinigte Methylmethacrylat und den (die) gereinigten (Meth)Acrylester anschließend direkt in den Polymerisationsreaktor einführt unter Verwendung von hermetisch verschlossenen Einrichtungen und unter Aufrechterhaltung einer von Staub befreiten Inertgasatmosphäre.

6. Verfahren nach Anspruch 1, **dadurch gekennzeichnet, dass** man den Polymerisationsinitiator entweder durch Destillation oder durch Umkristallisation reinigt, wobei man in einer staubfreien und inerten Gasatmosphäre arbeitet und dass man den gereinigten Polymerisationsinitiator in den Polymerisationsreaktor überführt unter Verwendung von Einrichtungen, die gegenüber Außenluft und gegenüber Stäuben abgeschirmt sind, wobei man dieses Agens gleichzeitig in einer Atmosphäre aus einem inerten und staubfreien Gas hält.

7. Verfahren nach Anspruch 1, **dadurch gekennzeichnet, dass** man das Kettenübertragungsmittel durch Destillation reinigt, wobei man in einer inerten und staubfreien Gasatmosphäre arbeitet, und dass man das destillierte Kettenübertragungsmittel in den Polymerisationsreaktor überführt unter Verwendung von Einrichtungen, die gegenüber der Außenluft und gegenüber Stäuben abgeschirmt sind, wobei man dieses Agens in einer inerten und staubfreien Gasamosphäre hält.

8. Verfahren nach Anspruch 1, **dadurch gekennzeichnet, dass** man das Suspendiermittel durch Umkristallisation reinigt, wobei man in einer inerten und staubfreien Gasatmosphäre arbeitet, und dass man das umkristallisierte Suspendiermittel in den Polymerisationsreaktor überführt unter Verwendung von Einrichtungen, die gegenüber der Außenluft und gegenüber Stäuben abgeschirmt sind, wobei man dieses Agens in einer inerten und staubfreien Gasamosphäre hält.

9. Verfahren nach einem der vorhergehenden Ansprüche, **dadurch gekennzeichnet, dass** man die Polymerisation in Suspension unter einem Druck durchführt, der im Wesentlichen gleich dem Atmosphärendruck oder geringfügig höher als der Atmosphärendruck ist.

10. Verfahren nach einem der vorhergehenden Ansprüche, **dadurch gekennzeichnet, dass** man unter den getrockneten Kugeln des ersten Polymers, die am Ende der Stufe (2) erhalten werden, diejenigen eliminiert, deren mittlerer Durchmesser unter 200 µm liegt.

11. Verfahren nach Anspruch 10, **dadurch gekennzeichnet, dass** man zur Herstellung des Kerns der optischen Faser nur die getrockneten Kugeln des ersten Polymers verwendet, deren mittlerer Durchmesser zwischen 500 µm und 2 mm variiert.

12. Verfahren nach einem der vorhergehenden Ansprüche, **dadurch gekennzeichnet, dass** man die Polymerisation in Suspension zur Herstellung eines ersten Polymers durchführt unter Verwendung von Kugeln, deren gewichtsmittleres Molekulargewicht ($\overline{Mw}$) zwischen 100 000 und 200 000 variiert mit einer Polydispersität (P) in der Größenordnung von 2.

13. Verfahren nach einem der vorhergehenden Ansprüche, **dadurch gekennzeichnet, dass** der Gehalt an restlichen Monomeren, die am Ende der Polymerisation in Suspension nicht reagiert haben, weniger als 2 Mol-% beträgt, bezogen auf die Gesamtmenge der für die Durchführung dieser Polymerisation eingesetzten Monomeren.

14. Verfahren nach einem der vorhergehenden Ansprüche, **dadurch gekennzeichnet, dass** man die Operationen zur Abtrennung, zum Waschen, zum Trocknen, zur Lagerung und zur Überführung der Kugeln aus dem ersten Polymer, das zur Herstellung des Kerns der optischen Faser dienen soll, in einer Atmosphäre aus einem inerten und staubfreien Gas durchführt.

15. Verfahren nach einem der vorhergehenden Ansprüche, **dadurch gekennzeichnet, dass** man die Kugeln des ersten Polymers, die zur Herstellung des Kerns der optischen Faser dienen sollen, bei einer Höchsttemperatur von 280 °C extrudiert.

16. Reihen-Anlage zur Durchführung des Verfahrens nach Anspruch 1, **dadurch gekennzeichnet, dass** sie so ausgestattet ist, dass sie gegenüber der Außenluft, gegenüber Stäuben und gegenüber Licht vollständig abgeschirmt ist und dass sie umfasst:

- Einrichtungen zur Reinigung des Methylmethacrylats und gegebenenfalls Einrichtungen zur Reinigung mindestens eines von Methylmethacrylat verschiedenen (Meth)Acrylesters, wobei diese Reinigungseinrichtungen in der Lage sein müssen, praktisch vollständig zu eliminieren den Polymerisationsinhibitor und Verunreinigungen, wie z.B.:

    (a) das Biacetyl bis auf eine verminderte Menge von höchstens 1 ppm, bezogen auf die Gesamtmenge der in den Polymerisationsreaktor eingeführten Monomeren,
    (b) Übergangsmetallionen, die starke Lichtabsorptionen im sichtbaren Bereich ergeben können,
    (c) Stäube oder Teilchen, wobei die für die Polymerisation in Suspension verwendeten verschiedenen genannten Ausgangsmaterialien erforderlichenfalls vor der Polymerisation filtriert worden sind mit einem Filtrationsschwellenwert von 0,1 μm;

- mindestens einen Reaktor für die Polymerisation in Suspension von Methylmethacrylat und gegebenenfalls mindestens einem von Methylmethacrylat verschiedenen (Meth)Acrylester in entmineralisiertem, filtriertem und von Sauerstoff befreitem Wasser in Gegenwart mindestens eines radikalischen Polymerisationsinitiators, mindestens eines Kettenübertragungsmittels und mindestens eines Suspendiermittels, wobei dieser Reaktor ausgestattet ist mit Einrichtungen zum Rühren des Reaktionsmediums, Einrichtungen, die das Anlegen eines schwachen partiellen Vakuums und eines leichten Überdrucks (bezogen auf den Atmosphärendruck) ermöglichen;
- Einrichtungen zur Abtrennung des in Form von kleinen Kugeln in dem Reaktor zur Polymerisation in wässriger Suspension erhaltenen Polymers;
- Einrichtungen zum Waschen der Kugeln mit entmineralisiertem und von Staub befreitem Wasser;
- gegebenenfalls Einrichtungen zur Klassierung der Kugeln;
- Einrichtungen zur Trocknung der Kugeln;
- gegebenenfalls Einrichtungen zur Durchführung einer antistatischen elektrischen Behandlung der Kugeln;
- Einrichtungen zur Aufbewahrung der Kugeln;
- Einrichtungen zur Überführung der Kugeln aus dem Polymerisationsreaktor durch die Trocknungseinrichtungen hindurch in die Coextrusionsanlage;
- eine Coextrusionsanlage, die mindestens zwei Extruder umfasst:

    • einen oder zwei Schneckenextruder mit einer Entgasungszone zur Bildung des Kerns der optischen Faser;
    • und einen zweiten Schneckenextruder zum Aufschmelzen und Verkneten des zweiten Polymers, aus dem die Hülle der optischen Faser hergestellt werden soll;

    sowie eine Einrichtung zum Verspinnen des Verbundwerkstoffs vom Kern-in-Hülle-Typ;
- Einrichtungen, welche die allmähliche und kontrollierte Abkühlung der die Coextrusionsanlage verlassenden optischen Faser erlauben; und
- Einrichtungen zum Ausziehen der optischen Faser bis zur Erzielung eines mittleren Gesamtdurchmessers der Faser zwischen 250 und 2 000 μm.

17. Reihen-Anlage nach Anspruch 16, **dadurch gekennzeichnet, dass** die Einrichtungen zum Reinigen des Methylmethacrylats und gegebenenfalls mindestens eines von Methylmethacrylat verschiedenen (Meth)Acrylesters aufeinanderfolgend umfassen:

- einen Filter, bestehend aus einem Bett aus basischem und aktiviertem Aluminiumoxid, vorzugsweise in einer Atmosphäre aus einem inerten und staubfreien Gas, um die Verbindungen mit labilem Wasserstoff, die stark polaren Verbindungen wie das Biacetyl sowie den Polymerisationsinhibitor mindestens teilweise zu eliminieren;
- mindestens eine Einrichtung zur Destillation unter partiellem Vakuum und in einer Atmosphäre aus einem inerten und staubfreien Gas, um die Gesamtmenge von Polymerisationsinhibitor, Biacetyl und Übergangsmetallionen zu eliminieren; und
- einen Filter, der die Eliminierung praktisch der Gesamtmenge der Teilchen oder Stäube mit einem mittleren Durchmesser von ≥ 0,1 μm erlaubt.

FIGURE UNIQUE